Europäisches Patentamt

European Patent Office

Office européen des brevets

(19)

(11) Numéro de publication: **0 067 768**
**A1**

(12) **DEMANDE DE BREVET EUROPEEN**

(21) Numéro de dépôt: **82401037.5**

(22) Date de dépôt: **08.06.82**

(51) Int. Cl.³: **G 01 S 7/28**
**G 01 S 7/44**

(30) Priorité: **16.06.81 FR 8111836**

(43) Date de publication de la demande:
**22.12.82 Bulletin 82/51**

(84) Etats contractants désignés:
**DE FR GB IT NL**

(71) Demandeur: **THOMSON-CSF**
**173, Boulevard Haussmann**
**F-75379 Paris Cedex 08(FR)**

(72) Inventeur: **Lepere, Guy**
**THOMSON-CSF SCPI 173, bld Haussmann**
**F-75379 Paris Cedex 08(FR)**

(72) Inventeur: **Melgar Ramirez, Cristobal**
**THOMSON-CSF SCPI 173, bld Haussamnn**
**F-75379 Paris Cedex 08(FR)**

(74) Mandataire: **Eisenbeth, Jacques Pierre et al,**
**THOMSON-CSF SCPI 173, Bld Haussmann**
**F-75379 Paris Cedex 08(FR)**

(54) **Dispositif de calcul de l'argument d'un signal complexe défini par ses deux composantes en quadrature, et application à un signal radar.**

(57) Dispositif de calcul de l'argument $\Phi$ d'un signal complexe, notamment d'un signal radar défini par ses deux composantes vidéo bipolaires I et Q.

Dispositif fonctionnant en numérique comprenant des moyens de calcul (6) du module de chaque composante I et Q, suivis de moyens de calcul (7) du logarithme de ces modules, ces signaux logarithmiques étant ensuite soustraits entre eux dans un circuit (8) délivrant une information qui est transcodée dans un circuit (9) délivrant l'argument $\Phi$.

Application à un radar Doppler.

./...

EP 0 067 768 A1

Fig. 2

1

## DISPOSITIF DE CALCUL DE L'ARGUMENT D'UN SIGNAL COMPLEXE DEFINI PAR SES DEUX COMPOSANTES EN QUADRATURE ET APPLICATION A UN SIGNAL RADAR

La présente invention concerne un dispositif de calcul de l'argument d'un signal complexe défini par ses deux composantes en quadrature, notamment d'un signal radar défini par ses deux composantes vidéo bipolaires I et Q. Un tel dispositif peut être ainsi utilisé dans tout radar effectuant des traitements Doppler.

Suivant son principe, un dispositif radar émet un signal qui peut atteindre une cible, cette dernière renvoyant alors un écho radar qui est capté par des récepteurs. Après démodulation cohérente de cet écho radar en fréquence intermédiaire, ces récepteurs délivrent des signaux vidéo bipolaires I et Q en quadrature de phase et pouvant s'écrire sous la forme :

$$I = A \sin \phi$$
$$\text{avec } A = \sqrt{I^2 + Q^2},$$
$$Q = A \cos \phi$$

A étant l'amplitude de l'écho renvoyé par la cible et $\phi$ la phase du signal reçu par le radar par rapport à la phase du signal émis par ce dernier. On montre ainsi que le signal radar est un signal complexe. Une description complète des récepteurs délivrant ces signaux vidéo bipolaires peut se trouver dans l'ouvrage "Radar Handbook" de Skolnik par exemple.

Dans un radar cohérent à impulsions, au cours de chaque récurrence, la période de réception est divisée en parties égales, dites cases distance. Une cible dans l'espace atteinte par un signal radar renvoie un écho qui se trouve dans une case distance et cet écho se répète au cours d'un nombre de récurrences dépendant de la vitesse de balayage de l'antenne radar et de l'ouverture de son diagramme de rayonnement. Comme les échos utiles sont mélangés à des signaux parasites, constituant ce qu'on appelle du bruit - ou clutter - il est tout à fait nécessaire de traiter ces signaux radar sur l'ensemble des récurrences contenant l'écho de la cible. Les deux vidéos bipolaires analogiques sont échantillonnées et codées numériquement à chaque case distance puis appliquées à des dispositifs de traitement des informations radar. Dans certains dispositifs comme celui décrit dans le brevet français dont le numéro d'enregistrement national est 76 02938, il est souvent nécessaire de calculer l'argument $\phi$ du signal radar à partir de ses deux composantes en quadrature I et Q.

Ce calcul de l'argument $\overline{\phi}$ doit de plus être fait pour chaque case distance élémentaire, qui est par ailleurs égale ou inférieure à la durée de l'impulsion radar. Cette dernière est très courte, notamment dans un radar de surveillance où elle peut être de l'ordre de O,5 µs, ce qui implique alors que le calcul de $\phi$ soit réalisé très rapidement.

La solution la plus classique consiste à calculer le module de la vidéo à l'aide d'algorithmes permettant de faire l'approximation de $\sqrt{I^2 + Q^2} = A$, puis d'effectuer le calcul A cos $\phi$/A et A sin $\phi$/A de façon à normer le signal et à disposer de l'information cos $\phi$ et sin $\phi$. Le calcul de l'argument $\phi$ s'effectue alors en testant le signe et l'amplitude des signaux cos $\phi$ et sin $\phi$. Le calcul de l'angle $\phi$ à partir des informations sin $\phi$ et cos $\phi$ a été décrit dans le brevet n° 1 529 822.

Une telle méthode présente deux inconvénients d'une part elle réalise des approximations et d'autre part, elle fait appel à des circuits multiplieurs parallèles, coûteux.

Une autre méthode consiste à tabuler directement $\phi$ à partir des informations I et Q. Pour mettre en oeuvre une telle solution il est nécessaire d'utiliser un nombre prohibitif de mémoires PROM (quelques centaines car à l'heure actuelle les vidéos bipolaires I et Q sont souvent codées sur un grand nombre de bits (2 x 10 bits + les bits de signe) et il n'existe pas de mémoire PROM de telle capacité.)

L'objet de la présente invention est un dispositif de calcul de l'argument $\phi$ d'un signal complexe ne présentait pas les inconvénients cités.

Suivant l'invention, le dispositif de calcul de l'argument $\Phi$ d'un signal complexe défini par ses deux composantes en quadrature I = A sin $\Phi$ et Q = A cos $\Phi$, comportant des moyens d'échantillonnage et de codage des deux composantes I et Q sous forme numérique avec un nombre déterminé N de bits plus un bit de signe, est tel qu'il comprend de plus, pour chaque composante I et Q, des premiers moyens de calcul du module $|I|$ et $|Q|$ de ces composantes en fonction de leur signe et ensuite des seconds moyens de calcul effectuant le logarithme de ces modules Log$|I|$ et Log$|Q|$, ces deux signaux logarithmiques numériques étant appliqués aux deux entrées d'un circuit soustracteur délivrant un signal logarithmique du rapport des deux modules Log $\dfrac{|I|}{|Q|}$ à un circuit de transcodage auquel il est connecté, le dit circuit recevant en plus sur deux autres entrées les bits de signe, mémorisés dans des circuits registres mémoires.

D'autres caractéristiques et avantages de l'invention apparaîtront dans la description qui suit, illustrée par les figures suivantes représentant :

– la figure 1 : un dispositif de calcul de l'art antérieur,

– la figure 2 : un dispositif de calcul suivant l'invention,

– la figure 3 : un exemple de réalisation non limitatif d'un dispositif suivant l'invention.

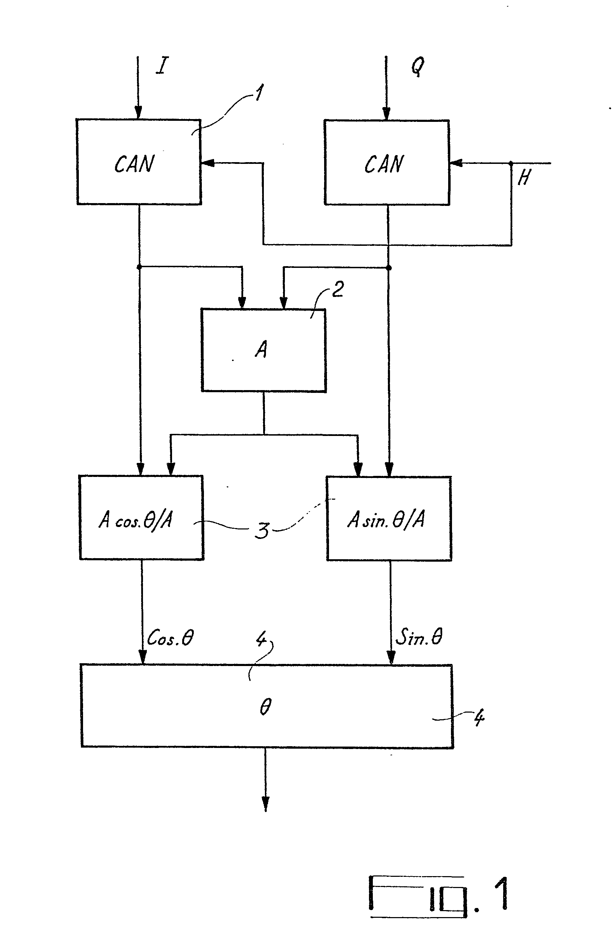

La figure 1 représente un dispositif de calcul suivant l'art antérieur, correspondant à l'algorithme cité précédemment. Les deux composantes analogiques vidéo I = A sin $\emptyset$ et Q = A cos $\emptyset$ sont appliquées chacune à un circuit échantillonneur et convertisseur analogique-numérique (1) ou transcodeur transformant ces deux signaux en signaux numériques, codés sur un certain nombre de bits. En sortie de ces circuits (1), est effectué par approximation dans le circuit (2), le calcul du module A du signal vidéo résultant des deux composantes I et Q : A = $\sqrt{I^2 + Q^2}$. Puis les composantes I et Q sont normées chacune dans un circuit (3), recevant d'une part les deux composantes numériques A cos $\emptyset$ et A sin $\emptyset$ et d'autre part le module A pour effectuer la normalisation. Ensuite ces circuits (3) délivrent les informations sur cos $\phi$ et sin $\phi$, qui sont introduites dans un dispositif de calcul (4) prenant en compte le signe et les valeurs de cos $\phi$ et sin $\phi$ pour délivrer la valeur $\phi$.

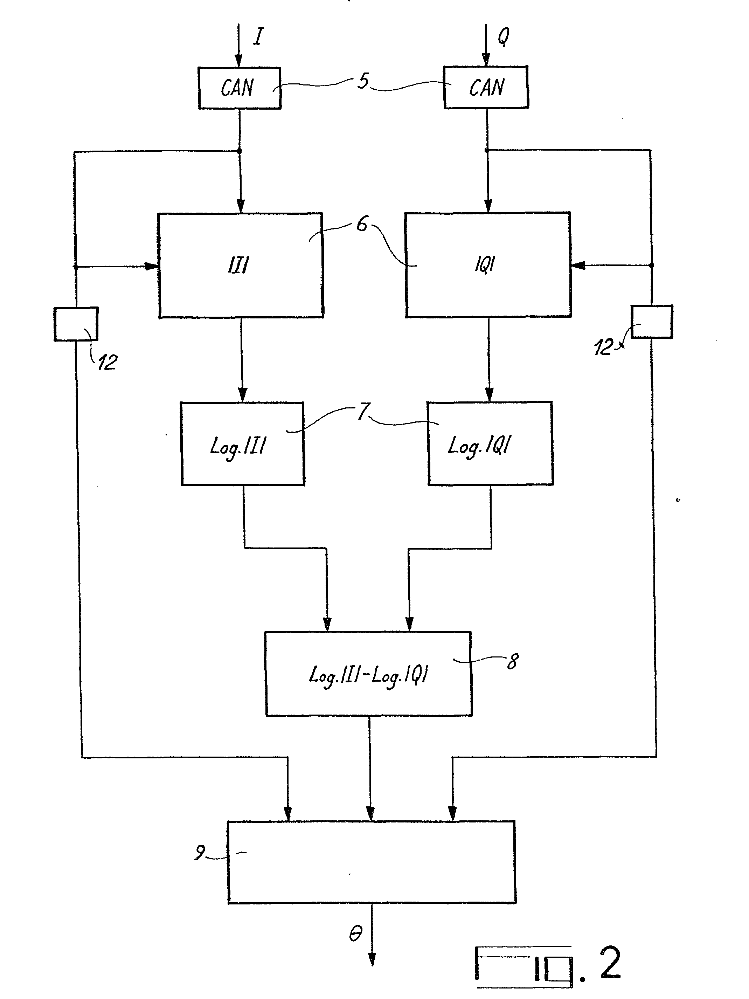

Sur la figure 2 est représenté un dispositif de calcul de l'argument $\bar{\phi}$ d'un signal complexe quelconque, à partir de ses deux composantes orthogonales I et Q, suivant l'invention. Ces deux composantes analogiques I = sin $\bar{\phi}$ et Q = cos $\bar{\phi}$ sont tout d'abord échantillonnées puis converties numériquement sur un nombre déterminé N de bits plus le bit de signe, chacune par un circuit transcodeur (5). Chacun de ces circuits est connecté en sortie à des moyens de calcul (6) des modules $|I|$ et $|Q|$ des composantes, calcul effectué selon leurs bits de signe. Des moyens de calcul (7) sont ensuite connectées à chacun des moyens précédents (6), pour délivrer le logarithme de ces modules : Log $|I|$ et Log $|Q|$ . Tous ces calculs sont bien sûr effectués numériquement. Les deux sorties respectives des moyens de calcul (7) sont reliées à un circuit soustracteur (8) réalisant l'opération suivante :

Log $|I|$ - Log $|Q|$, soit Log $\dfrac{|I|}{|Q|}$ , soit Log ($tg\ \bar{\phi}$ ), donnant donc

une information qui est une fonction de l'argument $\bar{\phi}$ du signal complexe. Cette information, ainsi que celles du signe des deux composantes I et Q mémorisées dans deux circuits (12), sont appliquées à un circuit de transcodage (9) délivrant la valeur de l'argument $\bar{\phi}$ à partir de chaque valeur des composantes.

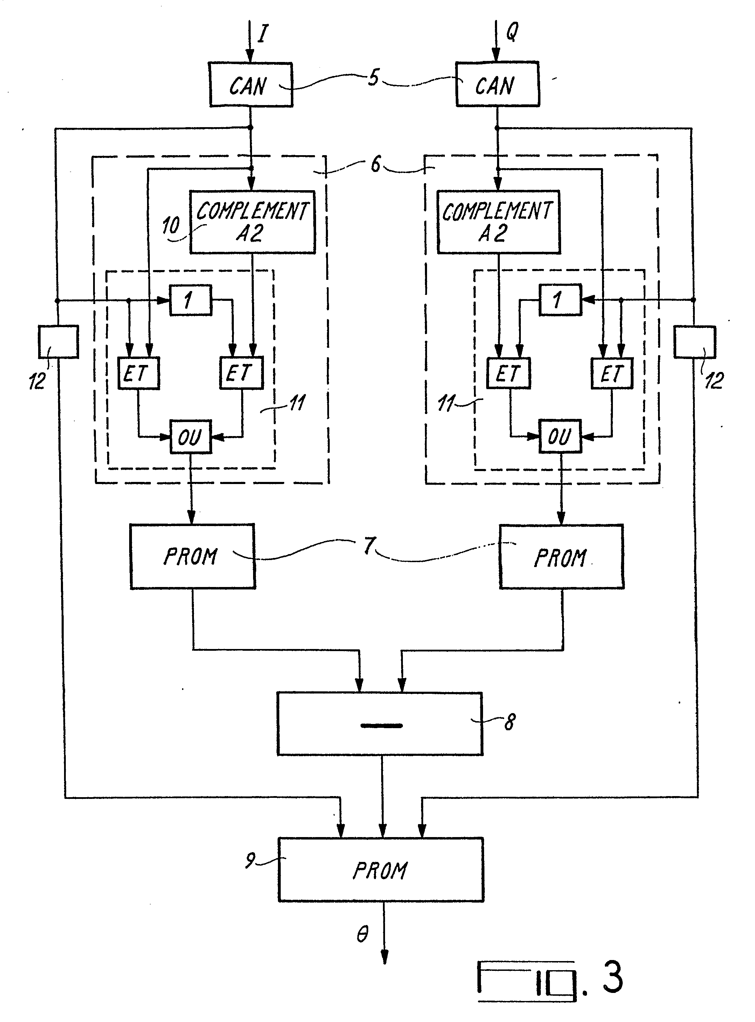

Sur la figure 3, est développé un exemple de réalisation d'un dispsitif de calcul suivant l'invention. Les moyens de calcul (6) des modules $|I|$ et $|Q|$ comprennent chacun un circuit (10) effectuant le complément à 2 du nombre binaire représentant I ou Q et un circuit multiplexeur (11) recevant, en entrée, d'une part le nombre binaire I ou Q et son complément à 2 et d'autre part le bit de signe de ces composantes. Ainsi grâce à ce circuit (11), le calcul du module de I par exemple est réalisé en conservant la valeur binaire si le signe est positif c'est-à-dire si le bit est O dans le cas choisi - et en prenant le complément à 2 si le signe est négatif. Ce choix est possible par l'intermédiaire des circuits logiques constituant le multiplexeur qui sélectionne le mot complémenté ou non complémenté en fonction de la valeur du bit de signe. Bien sûr, le calcul de $|Q|$ est réalisé de manière semblable. Afin de garder en mémoire les bits de signe des composantes I et Q, elles sont stockées dans des bascules 12.

Puis les modules $|I|$ et $|Q|$ passent chacun dans des moyens de calcul 7 qui sont des convertisseurs ou transcodeurs transformant les signaux linéaires $|I|$ et $|Q|$ en signaux logarithmiques ; ce sont généralement des mémoires mortes ou PROM (programed read only memory).

Si, dans un exemple particulier de réalisation, les composantes I et Q sont codées sous forme de mots parallèles de 10 bits plus le bit de signe et si la loi de transcodage est la suivante : $y = 16 \, Log_2 \, X$ avec $X$ variant de 1 à 1024, soit sur un codage de 10 bits + le signe, alors dans ces conditions, les signaux $Log \, |I|$ et $Log \, |Q|$ sont codés sur 8 bits grâce aux PROM d'une capacité de 1K x 8 bits chacune.

Ces deux signaux logarithmiques sont ensuite appliqués aux bornes du circuit soustracteur 8, qui est un circuit numérique réalisant la soustraction bit à bit des mots binaires. Il délivre alors un signal portant l'information $Log \, \dfrac{|I|}{|Q|} = Log \, (tg \, \phi)$, codée sur 8 bits plus le bit de signe.

Enfin, cette information sur l'argument $\phi$ ainsi que celles sur les signes des composantes sont appliquées à une mémoire PROM 9, qui délivre directement la valeur $\phi$ codée sur 8 bits, cette PROM ayant une capacité de 2K x 8 bits.

Tout ce qui vient d'être décrit pour un signal complexe quelconque reste valable pour un signal radar. Ainsi, ce dispositif selon l'invention permet de calculer l'argument d'un signal vidéo radar à partir de ses deux composantes vidéo bipolaires, sans nécessiter de mémoires PROM en grand nombre et de fortes capacités. Ce dispositif est très simple et peu coûteux. Il est applicable de plus à tout radar effectuant des traitements Doppler.

6

## REVENDICATIONS

1. Dispositif de calcul de l'argument $\Phi$ d'un signal complexe défini par ses deux composantes en quadrature $I = A \sin \Phi$ et $Q = A \cos \Phi$, comportant des moyens (5) d'échantillonnage et de codage des deux composantes I et Q sous forme numérique avec un nombre déterminé N de bits plus un bit de signe, caractérisé en ce qu'il comprend pour chaque composante I et Q, des premiers moyens de calcul (6) du module $|I|$ et $|Q|$ de ces composantes en fonction de leur signe et des seconds moyens de calcul (7) effectuant le logarithme de ces modules Log $|I|$ et Log $|Q|$ , ces deux signaux logarithmiques numériques étant appliqués aux deux entrées d'un circuit soustracteur (5) délivrant un signal logarithmique du rapport des deux modules : Log $\dfrac{|I|}{|Q|}$ à un circuit de transcodage (9) auquel il est connecté, le dit circuit recevant en plus sur deux autres entrées les bits de signe mémorisés dans des circuits (12), des deux composantes I et Q et délivrant la valeur de l'argument $\Phi$.

2. Dispositif de calcul selon la revendication 1, caractérisé en ce que les moyens de calcul (6) du module de chaque composante I et Q sont constitués par chacune d'elles par un multiplexeur (11) recevant sur deux entrées d'une part la valeur binaire de la composante et d'autre part la valeur de son complément à deux effectué dans un circuit (10) et sur une troisième entrée son bit de signe, ce multiplexeur permettant de sélectionner la valeur donnant le module en fonction du signe.

3. Dispositif de calcul selon la revendication 1, caractérisé en ce que les moyens de calcul (7) des valeurs logarithmiques des modules de chaque composantes I et Q sont constitués chacun par une mémoire PROM.

4. Dispositif de calcul selon la revendication 1, caractérisé en ce que le circuit de transcodage (9) est constitué par une mémoire PROM.

5. Application du dispositif de calcul, suivant l'une des revendications 1 à 4, à un signal complexe radar défini par ses deux

composantes vidéo bipolaire I et Q orthogonales.

6. Application du dispositif de calcul suivant l'invention, à un radar effectuant des traitements Doppler.

Fig. 1

Fig. 2

FIG. 3

# RAPPORT DE RECHERCHE EUROPEENNE

**0067768**

Office européen
des brevets

Numéro de la demande

EP 82 40 1037

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-4 078 250 (DAVID F. WINDSOR et al.) * Figures 1,2; colonne 1, ligne 43 - colonne 2, ligne 36 * | 1-5 | G 01 S 7/28 G 01 S 7/44 |
| Y | US-A-4 132 990 (J.A. DI DOMIZIO et al.) * Figures 1,3; colonne 4, ligne 16 - colonne 5, ligne 4; colonne 6, lignes 28-52 * | 1-5 | |
| A | FR-A-2 302 535 (INTERNATIONAL STANDARD) * Figure 1; page 3, ligne 20 - page 5, ligne 3 * | 1,5 | |
| A,D | FR-A-2 340 554 (THOMSON-CSF) * Figure 1; page 1, lignes 1,2; page 5, lignes 14-23 * | 1,5 | |

|  | DOMAINES TECHNIQUES RECHERCHES (Int. Cl. ³) |
|---|---|
| | G 01 S G 06 F |

Le présent rapport de recherche a été établi pour toutes les revendications

| Lieu de la recherche | Date d'achèvement de la recherche | Examinateur |
|---|---|---|
| LA HAYE | 16-08-1982 | CANNARD J.M. |